Europäisches Patentamt

European Patent Office

Office européen des brevets

(11) Veröffentlichungsnummer: **0 081 643**
**A1**

# (12) EUROPÄISCHE PATENTANMELDUNG

(21) Anmeldenummer: 82109256.6

(22) Anmeldetag: 07.10.82

(51) Int. Cl.³: **E 04 H 5/08, E 04 D 3/38,**
**E 04 D 3/366, A 01 G 9/14**

(30) Priorität: 11.12.81 DE 3149037

(43) Veröffentlichungstag der Anmeldung: 22.06.83
Patentblatt 83/25

(84) Benannte Vertragsstaaten: **AT BE CH FR GB IT LI NL**

(71) Anmelder: **artur fischer forschung, Weinhalde 14 - 18,**
**D-7244 Waldachtal 3 (Tumlingen) (DE)**

(72) Erfinder: **Fischer, Artur H. C., Dr., Weinhalde 34,**
**D-7244 Waldachtal 3/Tumlingen (DE)**
Erfinder: **Walther, Horst, Schröderstrasse16,**
**D-6900 Heidelberg (DE)**

(54) **Abdichtung der Enden und Stösse einer aus Platten bestehenden Aussenhaut.**

(57) Um die Abdichtung einer aus Platten, insbesondere Doppelstegplatten, bestehenden Außenhaut von Gewächshäusern, Hallen od.dgl. auch bei großen Wärmedehnungen der Platten und eine universelle Anwendbarkeit zu gewährleisten, besteht die Abdichtung aus einer auf die Stirnseiten der Platten (1) steckbaren, mit einem Verbindungsprofil (4) versehenen U-Schiene (3) und einem elastischen Band (5), das mit einem an das Verbindungsprofil (4) der U-Schiene (3) angepaßten Gegenprofil (6) an die Schiene (3) anfügbar ist.

EP 0 081 643 A1

EP 1449

**Abdichtung der Enden und Stöße einer aus Platten bestehenden Außenhaut**

Die Erfindung betrifft eine Abdichtung der Enden und Stöße einer aus Platten, insbesondere Doppelstegplatten bestehenden Außenhaut von Gewächshäusern, Hallen oder dgl..

Die Abdichtung der Stöße zweier Platten erfolgt bislang durch ein H-Profil, in dem die beiden parallel laufenden Stirnseiten der Platten aufgenommen sind. Aus montagetechnischen Gründen ist es notwendig, zunächst die Platten zu montieren und danach das H-Profil von einer Frontseite her auf die längslaufenden Stirnseiten der Platten aufzuziehen. Dies erfordert einen sehr hohen Kraftaufwand und kann unter Umständen an ungünstigen Stellen nicht durchgeführt werden. Ferner ist nach dieser Methode keine Abdichtung an den Enden einer aus Platten bestehenden Außenhaut möglich.

Eine weitere Möglichkeit besteht darin, auf die Stöße und an den Enden Folienbänder aufzukleben. Dieses Verfahren hat den Nachteil, daß durch Witterungseinflüsse, Dehnungen der Platten und dgl. in kürzester Zeit Undichtheiten entstehen. Darüberhinaus sind derartige Folien nicht in der Lage, die großen Wärmedehnungen der Platten, insbesondere bei aus Polykarbonat bestehenden Doppelstegplatten, unbeschadet aufzunehmen.

Der Erfindung liegt die Aufgabe zugrunde, eine Abdichtung zu schaffen, bei der die oben genannten Nachteile vermieden sind.

Erfindungsgemäß wird dies dadurch erreicht, daß die Abdichtung aus einer auf die Stirnseiten der Platten steckbaren, mit einem Verbindungsprofil versehenen U-Schiene und einem elastischen Band besteht, das mit einem an das Verbindungsprofil der Schiene angepaßten Gegenprofil an die Schiene anfügbar ist.

EP 1449

Vor dem Aufbringen der Platten auf die Unterkonstruktion eines Gewächshauses, Halle oder dgl. werden zumindest auf die die Stöße bildenden Stirnseiten der Platten die U-Schienen aufgesteckt. Die Aufnahme der U-Schienen ist so gestaltet, daß sie mit starker Friktion auf den Stirnseiten der Platten halten. Gegebenenfalls ist es auch möglich, durch Kleben die Friktion zu verbessern. Auf die parallel laufenden Verbindungsprofile der U-Schienen zweier einen Stoß bildenden Platten wird das bspw. aus Gummi bestehende Band aufgeklipst, das zu diesem Zweck an seiner Innenseite und im Bereich seiner beiden Längskanten die entsprechenden Gegenprofile aufweist. Damit ist der Stoß regendicht abgedichtet. Das elastische Band ist außerdem in der Lage, die durch Wärmedehnung der Platte entstehende Verringerung bzw. Vergrößerung des Stoßes auszugleichen. Die Elastizität des Bandes läßt es außerdem zu, Winkelstöße, wie sie bspw. an der Dachspitze oder am Übergang vom Dach zur senkrecht stehenden Außenhaut auftreten können, abzudichten. Ferner ist es möglich, auch an den Außenhautenden, an denen nur eine Schiene zum Aufklipsen des Bandes zur Verfügung steht, abzudichten. An diesen Stellen wird die nicht eingeklipste Längsseite des Bandes über die Unterkonstruktion, Fundament oder dgl. gelegt und sofern erforderlich, verschraubt, verklebt oder auf andere Art und Weise befestigt.

In einer weiteren Ausgestaltung der Erfindung kann das Verbindungsprofil der U-Schiene als hinterschnittene Leiste, und das Gegenprofil des Bandes als hinterschnittene Rille ausgebildet sein. Durch die Hinterschneidung ergibt sich eine auch hohe Windbelastungen standhaltende Verbindung.

Ferner kann das Band in Längsrichtung Faltungen aufweisen. Durch diese Faltungen ist das Band in der Lage, auch sehr große Stoßveränderungen infolge Wärmedehnungen der Platte auszugleichen.

Schließlich kann in einer weiteren Ergänzung der Erfindung das Band eine auf der Platte zur Auflage kommende Dichtungslippe aufweisen. Die Platten und die U-Schiene bestehen in der Regel aus einem steifen Kunststoff,

EP 1449

bspw. Polykarbonat. Damit sind Undichtheiten zwischen den Platten und dem äußeren Schenkel der U-Schiene insbesondere bei gekrümmten Konstruktionen nicht vollständig auszuschließen. Durch die elastische Dichtungslippe des Bandes, die an der Außenseite der Platte zur Anlage kommt, ist die Abdichtung gewährleistet.

Schließlich kann auf dem Grund der U-Schiene ein Steg angeordnet sein. Durch den Steg wird erreicht, daß zwischen dem Grund der U-Schiene und der Stirnseite der Platte ein Spalt entsteht. Dieser Spalt dient zur Abführung von Schwitzwasser und ggf. von an undichten Stellen möglicherweise noch eintretendem Regenwasser.

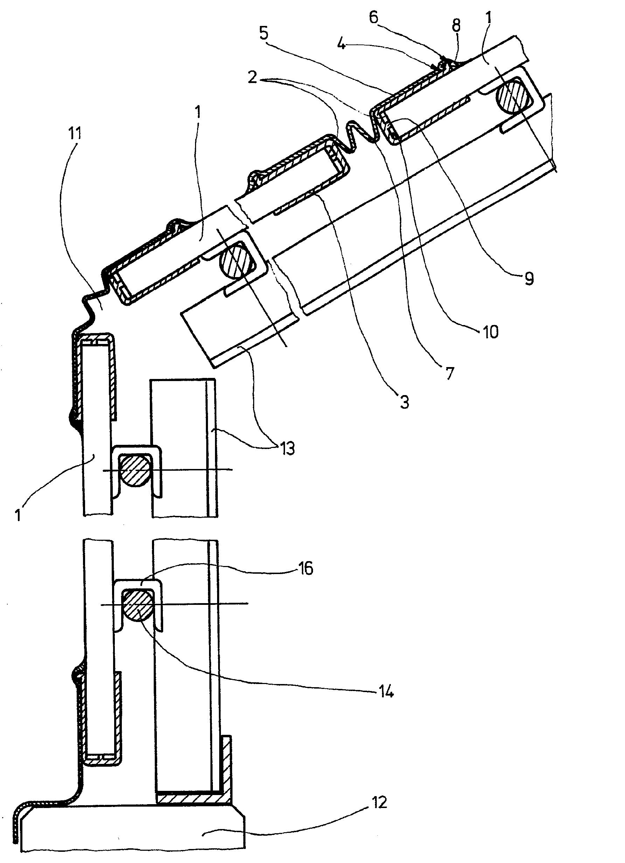

Anhand des in der Zeichnung dargestellten Schnittmodelles der Außenhaut eines Gewächshauses sind Ausführungsbeispiele der Erfindung erläutert.

Die Stoßabdichtung zweier Platten 1 ist an der Dachaußenhaut dargestellt. Auf die gegeneinander gerichteten Stirnseiten 2 der aus Polykarbonat bestehenden Doppelstegplatten 1 sind U-Schienen 3 aufgesteckt. Die U-Schienen 3 sind an ihren äußeren Schenkeln mit einem als hinterschnittene Leiste 4 ausgebildeten Verbindungsprofil versehen. Auf diese Leisten 4 ist das elastische, bspw. aus gummiartigem Werkstoff bestehende Band 5 aufgeklipst, das zu diesem Zweck im Bereich seiner beiden Längskanten mit einem entsprechenden, als hinterschnittene Rille 6 ausgebildeten Gegenprofil versehen ist. Um auch größere, durch Temperaturschwankungen auftretende Dehnungen der Platten 1 aufnehmen zu können, weist das Band 5 in seiner Längsrichtung Faltungen 7 auf. Um zu verhindern, daß zwischen der Außenfläche der Platten 1 und dem äußeren Schenkel der U-Schienen 3 Regenwasser eindringen kann, ist das Band 5 zusätzlich mit einer auf der Außenfläche der Platten anliegenden Dichtungslippe 8 versehen. Durch den im Grund der U-Schiene 3 angeordneten Steg 9 ergibt sich ein Spalt 10 zwischen dem Grund und der Stirnseite der Platte. In diesem Spalt 10 wird das Schwitzwasser und ggf. noch eindringendes Regenwasser aufgefangen und abgeleitet.

EP 1449

Die gleiche Abdichtung ist auch für den Winkelstoß 11 am Übergang der Dachschräge zur senkrechtstehenden Wand verwendbar. Durch die Elastizität des Bandes 5 wird ohne Schwierigkeiten die Winkelstellung überbrückt.

Die Abdichtung der Außenhaut im Bereich des Fundamentes 12 ist dadurch erreichbar, daß die nicht mit der U-Schiene 3 verbundene Längsseite des Bandes über das Fundament 12 gelegt und ggf. befestigt wird.

Zur Befestigung der aus Doppelstegplatten 1 gebildeten Außenhaut auf das aus Profilen bestehende Traggerippe 13 können auf das Traggerippe bspw. aus Rundstäben bestehende Streben 14 aufgelegt und mit entsprechenden Klammern befestigt werden. Mit den an den Platten 1 befestigten U-förmigen Bügeln 16 können die Platten nunmehr an diese Streben 14 eingehängt werden.

artur fischer forschung

7244 Tumlingen / Waldachtal 3

07. Dezember 1981

Ju/Woe

- 5 -

EP 1449

### Patentansprüche

1. Abdichtung der Enden und Stöße einer aus Platten, insbesondere Doppelstegplatten bestehenden Außenhaut von Gewächshäusern, Hallen oder dgl., dadurch gekennzeichnet, daß die Abdichtung aus einer auf die Stirnseiten der Platten steckbaren, mit einem Verbindungsprofil versehenen U-Schiene und einem elastischen Band besteht, das mit einem an das Verbindungsprofil der U-Schiene angepaßten Gegenprofil an die Schiene anfügbar ist.

2. Abdichtung nach Anspruch 1, dadurch gekennzeichnet, daß das Verbindungsprofil der U-Schiene als hinterschnittene Leiste, und das Gegenprofil des Bandes als hinterschnittene Rille ausgebildet ist.

EF 1449

3. Abdichtung nach Anspruch 1, dadurch gekennzeichnet, daß das Band in Längsrichtung Faltungen aufweist.

4. Abdichtung nach Anspruch 1, dadurch gekennzeichnet, daß das Band eine auf der Platte zur Auflage kommende Dichtungslippe aufweist.

5. Abdichtung nach Anspruch 1, dadurch gekennzeichnet, daß auf dem Grund der U-Schiene ein Steg angeordnet ist.

0081643

1/1

0081643

| Kategorie | Kennzeichnung des Dokuments mit Angabe, soweit erforderlich, der maßgeblichen Teile | betrifft Anspruch |
|---|---|---|
| A | DE - A - 1 945 940 (P. SCHULTE-STEMMERK KG FÜR INDUSTRIE UND HANDEL) <br> * Anspruch 1; Fig. 1 * <br> -- | 1,2 |
| A | FR - A - 2 079 609 (COMPAGNIE DE SAINT-GOBAIN) <br> * Seite 2, Fig. 2, 4 * <br> -- | 1,2 |
| A | FR - A - 2 126 158 (M. DI NOTA) <br> * Fig. * <br> - | 1,3 |
| A | DE - U - 1 793 920 (K. KALDENBERG) <br> * Fig. * <br> -- | 1,3 |
| A | US - A - 3 254 462 (G.P. TOLER) <br> * Spalten 2, 3; Fig. 1 bis 3 * <br> ---- | 1 |

**EINSCHLÄGIGE DOKUMENTE**

**KLASSIFIKATION DER ANMELDUNG (Int. Cl.³)**

E 04 H    5/08
E 04 D    3/38
E 04 D    3/366
A 01 G    9/14

**RECHERCHIERTE SACHGEBIETE (Int. Cl.³)**

A 01 G    9/00
E 04 D    3/00
E 04 H    5/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 30-11-1982 | v.WITTKEN |

EPA form 1503.1  06.78